# EUROPEAN PATENT SPECIFICATION

(11) **EP 1 194 714 B1**
(45) Date of publication and mention of the grant of the patent: **02.01.2004**
(21) Application number: 00936680.8
(22) Date of filing: 16.06.2000
(51) Int. Cl.: F16L 55/165, E02D 29/12

(54) **METHOD FOR IN SITU RENOVATION OF A MANHOLE, PARTICULARLY A SEWER MANHOLE, AND PREFABRICATED LINER THEREFORE**
VERFAHREN ZUR IN SITU RENOVIERUNG VON SCHÄCHTEN, INSBESONDERE ABWASSERSCHÄCHTEN, UND VORGEFERTIGTE AUSKLEIDUNG DAFÜR
PROCEDE POUR RENOVER IN SITU UN PUITS D'ACCES, EN PARTICULIER UN PUITS D'ACCES A UN EGOUT ET CHEMISAGE PREFABRIQUE Y RELATIF

(30) Priority: 18.06.1999 DK 87199
(43) Date of publication of application: 10.04.2002
(73) Proprietor: TUNETANKEN, A/S, DK-6600 Vejen (DK)
(72) Inventor: HOVAD, Karl, Erik, 6000 Kolding (DK)
(74) Representative: Gregersen, Niels Henrik
(86) International application number: PCT/DK2000/000322
(87) International publication number: WO 2000/079176

(56) References cited:
- US-A- 5 106 440
- US-A- 5 490 744
- PATENT ABSTRACTS OF JAPAN & JP 09 268 639 A (ASAHI TEC CORP) 14 October 1997

## Description

The present invention concerns a method for in situ renovation of underground tanks or wells, especially sewer manhole, where a prefabricated liner of reinforced plastic is inserted inside the well.

It is commonly known to perform renovation in situ of underground pipelines, e.g. sewer conduits, by means of a thermosetting polyester impregnated tubular stocking, which is made to fit by a longitudinal seam according to a specific task, and which then is turned into location by a special turning technique by means of water pressure for subsequent setting by supplying hot water. Furthermore, to a lesser extent it is known to use such in site renovation technique for renovating vertical tubular shafts in buildings, e.g. ventilation ducts or refuse chutes.

However, so far it has not been known to use a corresponding technique when the case is more voluminous vertical shafts such as transition wells which normally consist of a conical transition from 600 mm to 1000 mm, concrete rings with internal diameter of 1000 mm at a depth of about 1 to 4 m, depending on installation and a bottom section where inlet and outlet conduits and possible influx are joined. The bottom section is furthermore usually shaped with berms for obtaining an optimum sewage water flow in the well. The transition wells are located in the sewer network with a distance of about 50 m, and the transition wells are used for inspection, cleaning and the like. Furthermore, transition wells are also established where several sewer conduits are joined into a main conduit, or where there is inlet to a main conduit. A relatively large part of the many transition wells existing e.g. in Denmark need replacement within the next 10 years, corresponding to several thousand wells per year. The wells often lie in the roadway, which means that the cost of digging up and lowering into position of a new well will run up to about DKK 50,000 per well, and to this is added very great traffic inconveniences in the surroundings. It is expected that the problem has the same magnitude in other countries.

US-A-5,106,440 discloses a method for repairing manholes or wetwells, where a carrier or fiberglass liner is applied to the inner walls of a defective manhole to prevent further deterioration thereof and to provide a barrier to water and silt infiltration, thereby rehabilitating the manhole. The carrier impragnated with resin is placed in overlying relation to an elastomeric bladder. The assembly is lowered under gravity in to a cavity, such as a manhole or wettwell. Inflation results in the carrier being forced inti tightly conformance to the walls of the cavity. After the resin has cured in stu, the bladder is deflated and removed.

US-A-5,490,744 discloses an apparatus and method for inflating and curing a resin impregnated manhole liner including a resin impregnated liner lowered into an underground structure so that a portion of the liner extends beyond the structure. The protruding portion of the liner is then sealed. Pressurized air and steam are simultaneously admitted into the liner so that the liner inflates and engages the structure. Air and steam continue to be admitted into the liner for a period sufficient to cure the resin while manintaining the liner engaged with the stucture.

On this background the object of the invention is to provide a method of the kind mentioned in the introduction for in situ renovation of transition wells, and which can result in a considerable economic saving and a considerable reduction of the negative implications of the renovation.

The method according to the invention is characterised in that there is used a liner in the form of a glass fibre reinforced stocking of thermosetting polyester or epoxy formed on a rubber coated mould by winding, weaving or braiding, the liner being designed in such a way that the length/diameter ratio of the liner subsequently may be changed by changing the angle of inclination of the glass fibres relative to the longitudinal axis of the liner, i.e. adjusting the cross-section of the liner and simultaneous adjusting the length of the liner.

By means of the method so indicated it becomes possible to perform in situ renovation of underground manholes, e.g. transition wells, with simple measures and without the said negative traffic implications. According to the invention, the renovation may furthermore be performed relatively fast and without real digging work, i.e. considerably cheaper than a prior art renovation with replacement of a defective manhole. In terms of personnel, we are also speaking of considerable savings as a team of two or three persons may be counted on to renovate several manholes per working day, thus furthermore avoiding a long-term disruption of the sewer conduit.

Furthermore, we are speaking of a very optimal utilisation of the composite materials of the liner, glass fibres and thermosetting plastic (polyester or epoxy), where the single glass fibres are bonded together in such an intense way that by a wall thickness of 6 - 8 mm there is achieved a compression strength corresponding to the compression strength of a known plastic impregnated felt stocking with a wall thickness of about 20 mm.

Suitably, the method according to the invention may be thus modified, so that there is used a liner in the shape of a glass fibre reinforced stocking of thermosetting polyester or epoxy formed by winding, weaving or braiding externally of a unilaterally suspended, rubber coated mould with a diameter allowing the mould to be lowered through a sewer manhole curb or cone, i.e. with a diameter of the magnitude 500 - 900 mm, the rubber coating consisting of a detachable rubber bag that may be expanded with a factor of about 3, and which is preferably fastened to a flange that may be displaced externally of the mould, said polyester or epoxy liner being winded at an angle of about 15 - 20° relative to the longitudinal direction of the mould in such a way that the length/diameter ratio of the liner may subsequently be changed by changing the angle of inclination of the glass fibres up to about 120° relative to the longitudinal direction as the polyester or epoxy impregnated glass fibres are connected with said flange by the winding, weaving or braiding. The prefabricated liner may possibly finally be covered by winding with e.g. polyethylene film for possible cool storage until mounting in the well.

Preferably, the renovation of a manhole by the method according to the invention takes place in such a way that the mould with the closed end of the stocking shaped, glass fibre reinforced polyester or epoxy liner is lowered into the manhole, that pressure is supplied between rubber bag and mould, preferably by filling with water so that the liner expands and assumes the shape of the internal surface of the manhole simultaneously with the external flange being allowed to be displaced downward in such a way that the angle of inclination of the glass fibre winding is allowed to increase at the expansion of the liner, and, when the liner has accommodated to the internal surface of the manhole, hot water is supplied between mould and rubber bag so that the polyester or epoxy liner sets. Surprisingly, it has appeared that the polyester or epoxy liner expands rather easily by the water pressure and lies close to possible unevenesses at the inner side of the well, so that by the subsequent setting of the liner a smooth new, easy-to-clean surface is formed which furthermore may resist attack from chemicals occurring in sewage water.

If considered necessary, the method according to the invention may be further modified by the winding with polyester or epoxy impregnated glass fibre being combined with cutter glass, length about 25 mm, and possibly unifila mat.

In addition, the invention concerns a prefabricated liner for in situ renovation of wells, especially transition wells, said liner being characterised in that it consists of polyester or epoxy impregnated glass fibres, that the liner is formed with a wall thickness of 5 - 10 mm, preferably about 7 - 8 mm, by winding on a mainly horizontal, unilaterally and rotatably suspended, tubular mould with a diameter of about 500 mm, a length of about 6000 mm and a domed bottom with a centre support opposite to the rotary suspension, the tubular mould being covered by a detachable rubber bag prior to the winding, where the bag may expand with a factor of about 3 and is fastened to a flange situated close to the rotary suspension and which may be displaced externally of the tubular mould, and which is connected with the glass fibres, and that the length/diameter ratio of the liner subsequently may be changed by changing the angle of inclination of the glass fibres relative to the longitudinal axis of the liner, i.e. adjusting the cross-section of the liner and simultaneous adjusting the length of the liner.

In order to achieve a smooth inner side wall of the liner, said rubber bag is surrounded by a polyethylene film prior to the winding with polyester or epoxy impregnated glass fibres.

With the purpose of further reinforcing the liner according to the invention it may be suitable that the winding with polyester or epoxy impregnated glass fibres is combined with cutter glass, length about 25 mm, and possibly unifila mat.

The invention is explained in more detail in the following with reference to the drawing, in which:
- Fig. 1: shows a side view of a prefabricated liner consisting of polyester or epoxy impregnated glass fibres winded upon a horizontal tubular mould with a domed bottom opposite to a displaceable flange which is disposed close to a rotary suspension for the tubular mould,
- Fig. 2: shows a prefabricated liner according to the invention on a tubular mould which is lowered through a well curb, a tube cone and a transition well with bottom berm, and
- Fig. 3: shows how the cross-section of the liner is expanded by supplying a pressure medium, e.g. water, between the outer side of the tubular mould and the rubber bag so that the liner bears against the inner side of the well as the flange which is suspended displaceable externally of the tubular mould, and flange in which the liner is suspended by means of polyester or epoxy impregnated glass fibres, are simultaneously displaced downwards.

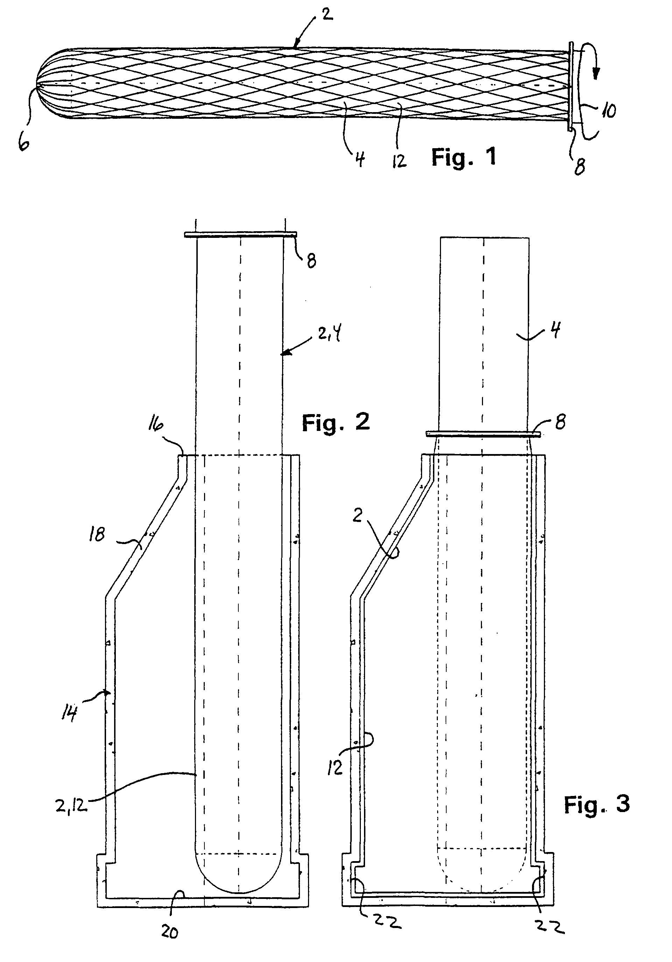

The liner 2 shown in Fig. 1 is winded, woven or braided on a tubular mould 4 arranged rotatable about a mainly horizontal axis and with a curved, closed end part 6 and a flange 8 suspended displaceable externally of the mould 4, where individual polyester or epoxy impregnated glass fibres are connected to the flange 8 as the glass fibres by the winding, weaving or braiding performed from the side in a way known per se, while the mould, as indicated with arrow 10, is rotated, are passed around radially projecting turning pins fastened in or connected with the flange 8.

To the mould 4 having a diameter of about 500 mm and a length of about 6000 mm is applied a rubber coating, preferably in the form of a detachable rubber bag 12 having an expansion factor of about 3. For protecting the rubber bag 12, this is then winded with cheap polyethylene film which simultaneously gives the mould surface a relatively smooth outer side. Then the liner 2 is formed by winding, weaving or braiding polyester or epoxy impregnated glass fibres externally of the rubber coated mould 4 until the wall thickness of the liner reaches 5 - 10 mm, preferably about 8 mm. Finally, the liner 2 thus prefabricated is covered by polyethylene film for cool storage of the liner 2 until mounting as the utilised polyester or epoxy is thermosetting.

Mounting of the liner 2, e.g. in a transition well 14 (Fig. 2) to be renovated, occurs in the following way, while it is presupposed that the transition well is cleaned beforehand, and that inlets and outlets are shut off with balloons so that the well is approximately dry. By means of crane equipment and scaffolding, the mould 4 with the liner 2 is lowered through the manhole curb 16 and well cone 18 until the closed, curved end part 6 is disposed immediately over the bottom 20 of the transition well 12. Hereafter pressure medium, preferably cold or tempered water, is supplied between the outer side of the mould 4 and the inner side of the rubber bag 12, whereby this and the liner 2 are expanded under simultaneous reduction of the length of the liner 2 until this is pressed against the inner side of the transition well 14.

When the liner 2 has assumed the same shape as the contour of the inner side of the transition well 14 including possible bottom berms with connecting pipe stubs 22, the supplied water is substituted with hot water so that the liner 2 consisting of glass fibres impregnated with a thermosetting polyester or epoxy sets. After the setting, the mould 4 and the rubber bag 12 are lifted up from the well, whereafter inlets and outlets are cut free and the well may be put into service when possible balloon blockings are removed. In that connection it is very important that during the renovation work according to the invention itself, no people have to work in the well.

As mentioned, the liner 2 is formed e.g. by winding, weaving or braiding the mould 4 with polyester or epoxy impregnated glass fibres until there is achieved a uniform wall thickness of about 8 mm as the winding, weaving or braiding is performed with angles of inclination of the magnitude 15 - 20° relative to the longitudinal direction of the mould/liner, i.e. relative to horizontal. By the subsequent expansion a change of the angles of inclination between the glass fibres occurs, up to about 120° relative to vertical direction (liner and mould are raised to standing position). During this angular displacement the polyester or epoxy material remains in place, i.e. one is working with a constant, known glass fibre position and constant wall thickness in prefabricated liner as well as in the finished and finally expanded liner 2.

It is expected that it is possible to remove the prefabricated liner 2 from the mould 4 quite early after the winding, weaving or braiding in that presumably it does not matter that the liner collapses during storage because there is relatively good control of the position of the polyester or epoxy material. Possibly the mould 4 may also be substituted by a relatively thin-walled and cheap tube which before winding, weaving or braiding has been inserted around the mandrel shaped mould, i.e. between this and the rubber bag. Cf. a further alternative, a special rubber bag with a certain basic rigidity could be used and which may prevent total collapse of the liner, but which anyway allows necessary expansion of the rubber bag.

Finally, it should be mentioned that the mentioned flange 8 to be displaced externally of the mould 4 because the individual glass fibres are connected with the flange 8 may in principle be substituted by a local, annular setting of the liner 2, e.g. immediately before the flange 8. Such a local annular setting may easily be established by means of electric heating wires that are only passed around the liner locally.

Under special circumstances, for example when the case is renovation of very deep manholes, it may be suitable, out of consideration to the transport, to make the liner at the factory with extra large diameter on an extra wide mould tube or on a possibly inflated rubber bag, i.e. with diameter much greater than the access opening (well curb opening). On the site of use the liner may be lifted up by a crane to vertical position, and the diameter of the liner may be reduced by letting air out of the rubber bag and possibly exchanging the mould tube with a thinner mould tube to a size allowing the liner to be lowered through the well cover opening, after which the diameter of the liner is increased again, as described hereinabove, by filling water into the rubber bag so that the liner is pressed outward against the inner wall of the well.

In the end it shall be mentioned that it will be within the scope of the invention to use the described method for internal reinforcing of quite different items. For example, the case could be making a conical stocking reinforcement with varying wall thickness for disposing and expanding inside a wind mill wing in order to impart necessary strength and optimum force transmission conditions to it.

## Claims

1. A method for in situ renovation of underground tanks or manholes, e.g. sewer manholes, where a prefabricated liner (2) of reinforced plastic is placed at the inner wall of the cavity, ***characterized* in that** there is used a liner (2) in the form of a glass fibre reinforced stocking of thermosetting polyester or epoxy formed on a rubber coated mould (4) by winding, weaving or braiding, the liner (2) being designed in such a way that the length/diameter ratio of the liner subsequently may be changed by changing the angle of inclination of the glass fibres relative to the longitudinal axis of the liner, i.e. adjusting the cross-section of the liner and simultaneous adjusting the length of the liner.

2. A method according to claim 1 and for renovation of a sewer manhole, ***characterized* in that** the used liner (2) is in the shape of a glass fibre reinforced stocking of thermosetting polyester or epoxy formed by winding, weaving or braiding externally of a unilaterally suspended, rubber coated mould (4) with a diameter allowing the mould to be lowered through a sewer manhole curb (16) or cone (18), i.e. with a diameter of the magnitude 500 - 900 mm, the rubber coating consisting of a detachable rubber bag (12) that may be expanded with a factor of about 3, and which is preferably fastened to a flange (8) that may be displaced externally of the mould (4), said polyester or epoxy liner (2) being winded at an angle of about 15 - 20° relative to the longitudinal direction of the mould (4) in such a way that the length/diameter ratio of the liner may subsequently be changed by changing the angle of inclination of the glass fibres up to about 120° relative to the longitudinal direction as the polyester or epoxy impregnated glass fibres are connected with said flange (8) by the winding, weaving or braiding.

3. A method according to claim 1 and 2, ***characterized* in that** the mould (4) with the closed end of the stocking shaped, glass fibre reinforced polyester or epoxy liner (2) is lowered into the manhole, that pressure is supplied between rubber bag (12) and mould (4), preferably by filling with water so that the liner expands and assumes the shape of the internal surface of the manhole simultaneously with the external flange (8) being allowed to be displaced downward in such a way that the angle of inclination of the glass fibre winding is allowed to increase at the expansion of the liner (2), and, when the liner has accommodated to the internal surface of the manhole, hot water is supplied between mould and rubber bag so that the polyester or epoxy liner sets.

4. A method according to claim 1 - 3, ***characterized* in that** the winding with polyester or epoxy impregnated glass fibre is combined with cutter glass, length about 25 mm, and possibly unifila mat.

5. Prefabricated liner (2) for use by carrying out the method according to claim 1 for in situ renovation of underground cavities or manholes, e.g. a transition well (14), ***characterized* in that** the liner (2) consists of polyester or epoxy impregnated glass fibres, that the liner (2) is formed with a wall thickness of 5 - 10 mm, preferably about 7 - 8 mm, by winding on a mainly horizontal, unilaterally and rotatably suspended, tubular mould (4) with a diameter of about 500 mm, a length of about 6000 mm and a domed bottom with a centre support opposite to the rotary suspension, the tubular mould (4) being covered by a detachable rubber bag (12) prior to the winding, where the bag (12) may expand with a factor of about 3 and is fastened to a flange (8) situated close to the rotary suspension and which may be displaced externally of the tubular mould (4), and which is connected with the glass fibres, and that the length/diameter ratio of the liner (2) subsequently may be changed by changing the angle of inclination of the glass fibres relative to the longitudinal axis of the liner (2), i.e. adjusting the cross-section of the liner (2) and simultaneous adjusting the length of the liner (2).

6. Prefabricated liner (2) according to claim 5, ***characterized* in that** prior to the winding with polyester or epoxy impregnated glass fibres, the rubber bag (12) is surrounded by a polyethylene film.

7. Prefabricated liner (2) according to claim 5, ***characterized* in that** the winding with polyester or epoxy impregnated glass fibres is combined with cutter glass, length about 25 mm, and possibly unifila mat.

## Patentansprüche

1. Verfahren zur *In*-*situ*-Renovierung von unterirdischen Behältern oder begehbaren Schächten, z.B. begehbaren Abwasserschächten, wobei eine vorgefertigte Auskleidung (2) aus verstärktem Kunststoff an der Innenwand der Höhlung angebracht wird, **dadurch gekennzeichnet, dass** eine Auskleidung (2) in Form eines glasfaserverstärkten Strumpfes aus wärmehärtendem Polyester oder Epoxy verwendet wird, die an einer gummibeschichteten Form (4) mittels Wickeln, Weben oder Flechten hergestellt wird, wobei die Auskleidung (2) so gestaltet ist, dass das Länge/Durchmesser-Verhältnis der Auskleidung anschließend durch Verändern des Inklinationswinkels der Glasfasern relativ zur Längsachse der Auskleidung, d.h. durch Einstellen des Querschnitts der Auskleidung und gleichzeitiges Einstellen der Länge der Auskleidung, verändert werden kann.

2. Verfahren gemäß Anspruch 1 und zur Renovierung eines begehbaren Abwasserschachts, **dadurch gekennzeichnet, dass** die verwendete Auskleidung (2) die Gestalt eines glasfaserverstärkten Strumpfes aus wärmehärtendem Polyester oder Epoxy hat, der durch Wickeln, Weben oder Flechten außerhalb einer einseitig unterstützten gummibeschichteten Form (4) hergestellt wird, deren Durchmesser derart ist, dass die Form durch einen Tragring (16) oder Konus (18) eines begehbaren Abwasserschachts, d.h. mit einem Durchmesser in der Größenordnung von 500-900 mm, abgesenkt werden kann, wobei die Gummibeschichtung aus einen ablösbaren Gummisack (12) besteht, der mit einem Faktor von etwa 3 gedehnt werden kann, und vorzugsweise an einem Flansch (8) befestigt ist, der außerhalb der Form (4) versetzt werden kann, wobei die Polyester- oder Epoxyauskleidung (2) in einem Winkel von etwa 15-20° relativ zur Längsrichtung der Form (4) derart gewickelt wird, dass das Lange/Durchmesser-Verhältnis der Auskleidung anschließend durch Verändern des Inklinationswinkels der Glasfasern bis zu etwa 120° relativ zur Längsrichtung verändert werden kann, wenn die polyester- oder epoxyimprägnierten Glasfasern mit dem Flansch (8) durch das Wickeln, Weben oder Flechten verbunden sind.

3. Verfahren nach Anspruch 1 und 2, **dadurch gekennzeichnet, dass** die Form (4) mit dem geschlossenen Ende der strumpfförmigen, glasfaserverstärkten Polyester- oder Epoxyauskleidung (2) in den begehbaren Schacht abgesenkt wird, dass Druck zwischen Gummisack (12) und Form (4) angelegt wird, vorzugsweise durch Füllen mit Wasser, so dass sich die Auskleidung ausdehnt und die Gestalt der inneren Oberfläche des Schachts annimmt, wobei man gleichzeitig den externen Flansch (8) sich derart nach unten versetzen lässt, dass der Inklinationswinkel der Glasfaserwicklung sich bei der Ausdehnung der Auskleidung (2) vergrößern kann, und dass, wenn die Auskleidung sich an die innere Oberfläche des begehbaren Schachts angelegt hat, heißes Wasser zwischen Form und Gummisack zugeführt wird, so dass die Polyester- oder Epoxyauskleidung aushärtet.

4. Verfahren nach Anspruch 1-3, **dadurch gekennzeichnet, dass** das Wickeln mit polyester- oder epoxyimprägnierter Glasfaser mit Fräsglas, Länge etwa 25 mm, und gegebenenfalls Einfadenmatte kombiniert wird.

5. Vorgefertigte Auskleidung (2) für die Verwendung mittels Durchführung des Verfahrens gemäß Anspruch 1 zur *In-situ*-Renovierung unterirdischer Höhlungen oder begehbarer Schächte, z.B. eines Übergangsbrunnens (14), **dadurch gekennzeichnet, dass** die Auskleidung (2) aus polyester- oder epoxyimprägnierten Glasfasern besteht, dass die Auskleidung (2) mit einer Wandstärke von 5-10 mm, vorzugsweise etwa 7-8 mm, durch Wickeln an einer größtenteils horizontalen, einseitig und drehbar unterstützten röhrenförmigen Form (4) mit einem Durchmesser von etwa 500 mm, einer Länge von etwa 6000 mm und einem ausgebauchten Boden mit zentraler Unterstützung gegenüber der drehbaren Aufhängung hergestellt wird, wobei die röhrenförmige Form (4) vor dem Wickeln von einem ablösbaren Gummisack (12) bedeckt wird, wobei der Sack (12) sich mit einem Faktor von etwa 3 dehnen kann und an einem Flansch (8) befestigt ist, der sich nahe der drehbaren Aufhängung befindet und der außerhalb der röhrenförmigen Form (4) versetzt werden kann und mit den Glasfasern verbunden ist, und dadurch, dass das Länge/Durchmesser-Verhältnis der Auskleidung (2) anschließend durch Verändern des Inklinationswinkels der Glasfasern relativ zur Längsachse der Auskleidung (2), d.h. durch Einstellen des Querschnitts der Auskleidung (2) und gleichzeitiges Einstellen der Länge der Auskleidung (2), verändert werden kann.

6. Vorgefertigte Auskleidung (2) gemäß Anspruch 5, **dadurch gekennzeichnet, dass** vor dem Wickeln mit polyester- oder epoxyimprägnierten Glasfasern der Gummisack (12) von einem Polyethylenfilm umgeben ist.

7. Vorgefertigte Auskleidung (2) gemäß Anspruch 5, **dadurch gekennzeichnet**, das Wickeln mit polyester- oder epoxyimprägnierten Glasfasern mit Fräsglas, Länge etwa 25 mm, und gegebenenfalls Einfadenmatte kombiniert wird.

## Revendications

1. Procédé pour la rénovation in situ de réservoirs ou regards souterrains, par exemple des regards d'égout, où un revêtement préfabriqué (2) de plastique renforcé est placé au niveau de la paroi intérieure de la cavité, **caractérisé en ce qu'**il est utilisé un revêtement (2) sous forme d'une poche renforcée à la fibre de verre de polyester ou époxy thermodurcissable formée sur un moule caoutchouté (4) par enroulage, tissage ou tressage, le revêtement (2) étant conçu de manière telle que le rapport longueur/diamètre du revêtement peut par la suite être changé en changeant l'angle de l'inclinaison des fibres de verre par rapport à l'axe longitudinal du revêtement, c'est-à-dire régler la coupe transversale du revêtement et simultanément régler la longueur du revêtement.

2. Procédé selon la revendication 1 et pour la rénovation d'un regard d'égout, **caractérisé en ce que** le revêtement utilisé (2) est sous forme d'une poche renforcée à la fibre de verre de polyester ou époxy thermodurcissable formé par enroulage, tissage ou tressage de façon externe à un moule caoutchouté suspendu de façon unilatérale (4) avec un diamètre permettant au moule d'être baissé à travers une bordure ou un cône (18) de regard d'égout (16), c'est-à-dire avec un diamètre compris entre 500 et 900 mm, le revêtement de caoutchouc se composant d'un sac en caoutchouc détachable (12) qui peut être élargi selon un facteur d'environ 3, et qui est de préférence fixé à une bride (8) qui peut être déplacée de façon externe au moule (4), ledit revêtement de polyester ou époxy (2) étant enroulé à un angle d'environ 15 à 20° par rapport à la direction longitudinale du moule (4) de manière telle que le rapport longueur/diamètre du revêtement peut par la suite être changé en changeant l'angle d'inclinaison des fibres de verre jusqu'à environ 120° par rapport à la direction longitudinale lorsque les fibres de verre imprégnées de polyester ou époxy sont reliées à ladite bride (8) par l'enroulage, le tissage ou le tressage.

3. Procédé selon la revendication 1 et 2, **caractérisé en ce que** le moule (4) avec l'extrémité fermée du revêtement de polyester ou époxy renforcé à la fibre de verre en forme de poche (2) est baissé dans le regard, qu'une pression est appliquée entre le sac en caoutchouc (12) et le moule (4), de préférence par remplissage avec de l'eau de telle sorte que le revêtement s'élargit et prend la forme de la surface interne du regard en même temps que la bride externe (8) est en mesure d'être déplacée vers le bas de manière telle que l'angle d'inclinaison de l'enroulage des fibres de verre est en mesure d'augmenter lors de l'expansion du revêtement (2), et, lorsque le revêtement s'est logé contre la surface interne du regard, de l'eau chaude est fournie entre le moule et le sac en caoutchouc de telle sorte que le revêtement en polyester ou époxy durcit.

4. Procédé selon la revendication 1 à 3, **caractérisé en ce que** l'enroulage avec des fibres de verre imprégnées de polyester ou époxy est combiné avec du verre à couper, d'environ 25 mm de long, et éventuellement une toile d'unifila.

5. Revêtement préfabriqué (2) destiné à être utilisé en réalisant le procédé selon la revendication 1 pour la rénovation in situ de cavités ou regards souterrains, par exemple un puits de transition (14), **caractérisé en ce que** le revêtement se compose de fibres de verre imprégnées de polyester ou époxy, que le revêtement (2) est formé avec une épaisseur de paroi de 5 à 10 mm, de préférence environ de 7 à 8 mm, par enroulage sur un moule tubulaire, suspendu de façon unilatérale et de façon rotative, principalement horizontal (4) avec un diamètre d'environ 500 mm, une longueur d'environ 6000 mm et un fond bombé avec un support central en face de la suspension rotative, le moule tubulaire (4) étant recouvert par un sac en caoutchouc détachable (12) avant l'enroulage, où le sac (12) peut s'élargir selon un facteur d'environ 3 et est fixé à une bride (8) située près de la suspension rotative et qui peut être déplacée de façon externe au moule tubulaire (4), et qui est reliée aux fibres de verre, et que le rapport longueur/diamètre du revêtement (2) peut par la suite être changé en changeant l'angle d'inclination des fibres de verre par rapport à l'axe longitudinal du revêtement (2), c'est-à-dire régler la coupe transversale du revêtement (2) et simultanément régler la longueur du revêtement (2).

6. Revêtement préfabriqué (2) selon la revendication 5, **caractérisé en ce qu'**avant l'enroulage avec des fibres de verre imprégnées de polyester ou époxy, le sac en caoutchouc (12) est entouré par un film polyéthylène.

7. Revêtement préfabriqué (2) selon la revendication 5, **caractérisé en ce que** l'enroulage avec des fibres de verre imprégnées de polyester ou époxy est combiné avec du verre à couper, d'environ 25 mm de long, et éventuellement une toile d'unifila.
